# EUROPEAN PATENT SPECIFICATION

(11) **EP 2 250 601 B1**
(45) Date of publication and mention of the grant of the patent: **27.12.2017**
(21) Application number: 09716683.9
(22) Date of filing: 02.03.2009
(51) Int. Cl.: G06F 21/51

(54) **SYSTEM AND METHOD OF AUTHORIZING EXECUTION OF SOFTWARE CODE IN A DEVICE BASED ON ENTITLEMENTS GRANTED TO A CARRIER**
SYSTEM UND VERFAHREN ZUR AUTORISIERUNG DER AUSFÜHRUNG EINES SOFTWARE-CODES IN EINER AUF AN EINEN TRÄGER ÜBERTRAGENEN BERECHTIGUNGEN BERUHENDEN VORRICHTUNG
SYSTÈME ET PROCÉDÉ D' AUTORISATION D' ÉXÉCUTION D' UN CODE LOGICIEL SUR LA BASE DES DROITS ACCORDÉS À UN EXPLOITANT DE RÉSEAU

(30) Priority: 04.03.2008 US 33728 P
(43) Date of publication of application: 17.11.2010
(73) Proprietor: APPLE INC., Cupertino, CA 95014 (US)
(72) Inventor: DE ATLEY, Dallas, San Francisco CA 94114 (US); PANTHER, Heiko, San Francisco CA 94114 (US); ADLER, Mitchell, Cupertino CA 95014 (US); COOPER, Simon, Cupertino CA 95014 (US); BROUWER, Michael, San Jose CA 95136 (US); REDA, Matt, San Jose CA 95118 (US)
(74) Representative: Lang, Johannes
(86) International application number: PCT/US2009/035755
(87) International publication number: WO 2009/111411

(56) References cited:
- WO-A-2006/083015
- WO-A-2006/101549
- US-A1- 2004 064 457
- US-A1- 2006 177 068
- US-B1- 6 779 117

## Description

### BACKGROUND

### Field

This application relates to controlling execution of software code.

### Description of the Related Technology

Different network carriers often have different requirements regarding how mobile computing devices can interact with their respective networks or the applications they may execute. In order to ensure that a mobile computing device operates properly and complies with network policies, it typically undergoes a provisioning process, which configures the phone via a firmware update to operate on the carrier's network.

In addition, often times, these computing devices may be configured to require that code executed on the computer system be authorized by a trusted party. For example, such authorization may be used to help ensure that the integrity of the computing device is not compromised by malicious or unauthorized code. In some cases, computing devices may be configured to require that code be digitally signed by the trusted party and verified in order to be executed on the computing device and/or to control execution of software that accesses particular resources or services of the device. Verification of the digital signature helps to ensure that the underlying application code has not been modified since it was digitally signed by the trusted authority.

However, the mobile devices often have capabilities that the carriers do not want utilized on their networks. For example, a mobile device may be designed with Bluetooth functionality, but the carrier may wish to prevent its users from taking advantage of that capability. Various applications on these devices may also need to be restricted. Unfortunately, it is difficult to enforce these limitations on mobile devices that employ the application signing security mentioned above.

Prior art document WO2006/101549-A2 discloses a systems and methods are described for allowing the execution of authorized computer program code and for protecting computer systems and networks from unauthorized code execution. multi-level proactive whitelist approach is employed to secure a computer system by allowing only the execution of authorized computer program code thereby protecting the computer system against the execution of malicious code such as viruses, Trojan horses, spy-ware, and/or the like.

### BRIEF DESCRIPTION OF THE DRAWINGS

Figure 1 is a block diagram illustrating an example of a computing environment in which software code is distributed from one or more carriers to computing devices.
Figure 2 is a block diagram illustrating one embodiment of software components of a computing device in an environment such as illustrated in Figure 1.
Figure 3 is a block diagram illustrating one embodiment of a profile for controlling execution of software on a device such as illustrated in Figure 2.
Figure 4 is a block diagram illustrating data flow between software components of one embodiment of the computing device illustrated in Figure 2.
Figure 5 is a flowchart illustrating on embodiment of a method of executing software based on profiles such as illustrated in Figure 2.
Figure 6 is a flowchart illustrating portions of the method of Figure 5 in more detail.
Figure 7 is a block diagram illustrating one example of a computing device such as illustrated in Figure 2.
Figures 8A and 8B are block diagrams illustrating one example of a computing device such as illustrated in Figure 2.
Figure 9 is a block diagram illustrating one example of an implementation of a mobile device such as illustrated in Figures 8A and 8B.

### DETAILED DESCRIPTION

Various embodiments described herein provide systems and methods for controlling computing devices, for example, on carrier networks based on an enforced carrier profile. In some instances, a computing device may be configured to require that some or all of the code be digitally signed by a trusted party and verified in order to be executed on the computing device. Systems and methods are disclosed herein, which can allow carriers to install their profiles on the computing device connected to their network. Using the systems and methods described herein, carriers may thus be able to effectively apply profiles to those computing devices to control access to facilities and resources on the devices in such a way that trusted applications also comply with the desired policies of the carrier.

In some embodiments, in order to have its profile installed on a computing device, a carrier (or its representative) may send requests to a trusted authority. This request may specify types of access and functionality that the carrier would like devices to have while operating on its network. The trusted authority may create for the carrier a carrier profile, which reflects the carrier's desired network policies for those devices on the carrier's network or allows the carrier to modify the device appropriately. An access profile and a policy process may also be provided and installed onto the specified devices to enforce this carrier profile.

When code executes on the device, the policy process may check entitlements specified in the carrier profile to determine whether the code execution request may be granted. If the carrier profile includes the necessary entitlements, the code may be permitted to access the data and/or system functionality requested. If the carrier profile does not include the necessary entitlements, the ability of the code to access certain data and/or functionality on the device may be restricted.

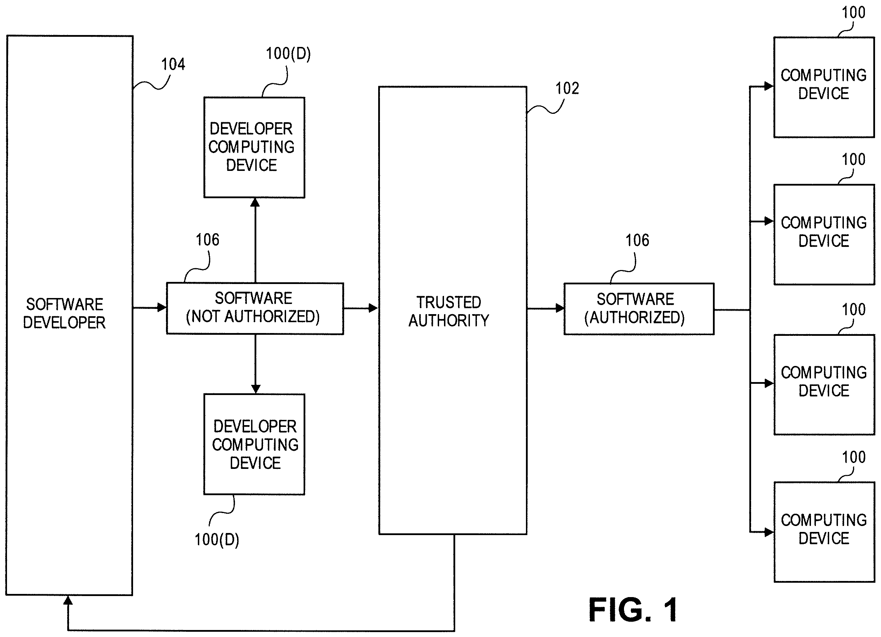

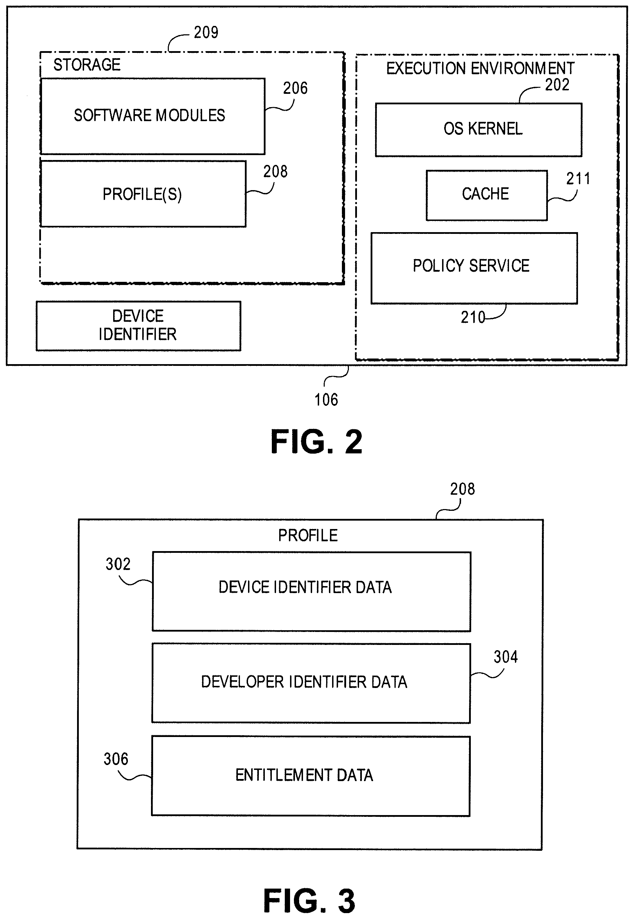

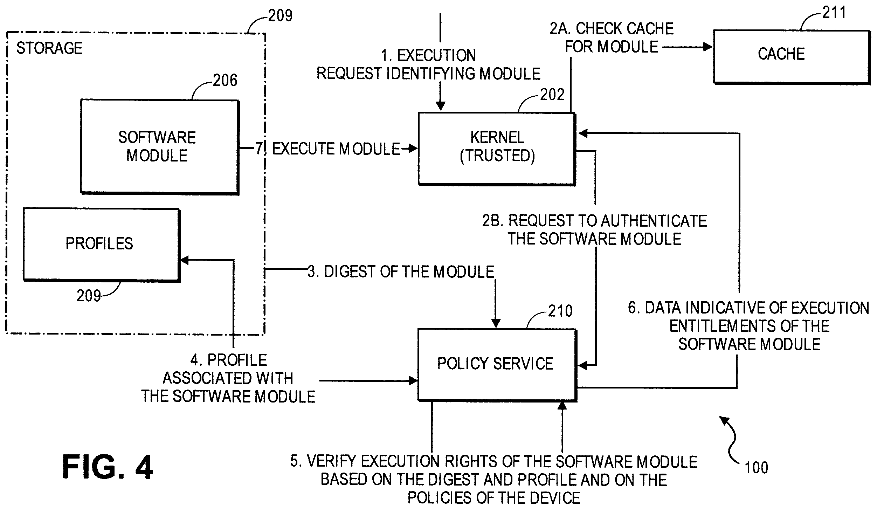

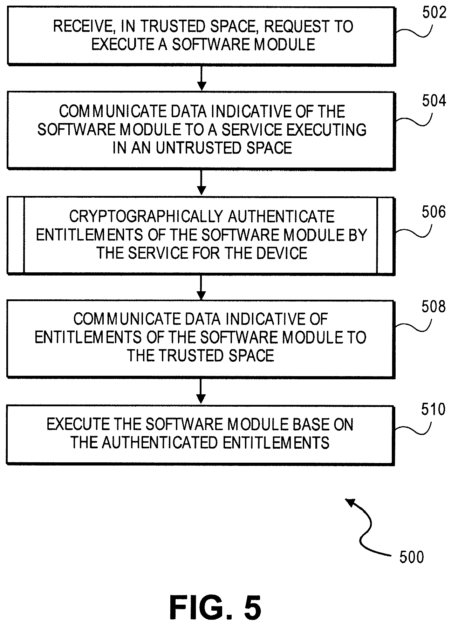

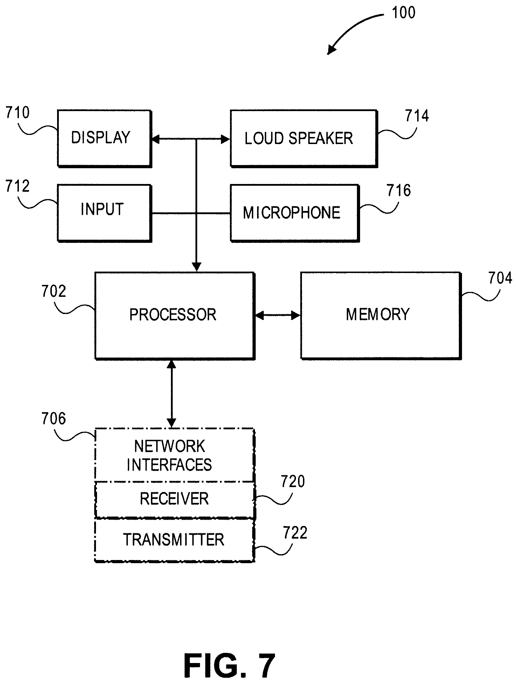

In order to illustrate embodiments of the present invention, Figures 1-7 will now be presented below. Figure 1 illustrates an overall system diagram in, which embodiments may be implemented. Figures 2-3 show embodiments of software components and exemplary profile for controlling execution of software. Figure 4 shows one example of a data flow between software components. Figures 5-6 then illustrate process flowcharts for executing software based on profiles. Figure 7 is provided to illustrate one example of a mobile computing device. These figures will now be further described below beginning with reference to Figure 1.

Figure 1 is an example of an environment suitable for practicing various embodiments described herein. In the system shown, computing devices 100 may be provided or controlled from trusted authority 102 and may utilize a network operated by carrier 104. These entities and components will now be further described.

Computing devices 100 may be mobile computing devices, such as mobile telephones, mobile smart-phones, or some other type of mobile device. Computing devices 100 may be configured to run an operating system that requires some or all of the code executing be approved by trusted authority 102. Thus, if software is delivered in an unauthorized state to computing devices 100, the devices may be unable to fully execute the code instructions included in the software because they have not been authorized.

Although the present disclosure relates to mobile devices, computing devices 100 may be any number of different types of computing devices, including desktop computers, laptop computers, handheld computers, personal digital assistant (PDA) devices, mobile telephone devices, media play device, and the like.

When a user wishes to operate their computing device 100 on the network of carrier 104, that device 100 may need to be provisioned or activated so that it is able to operate on the network. In one or more embodiments, activation service 106 is used to perform this provisioning process. Activation service 106 may be implemented as one or more servers on a network, such as the Internet, that transmit data to computing device 100, which is then used to configure device 100 to operate on the network of carrier 104.

The data transmitted by activation service 106 may take the form of what can be referred to as a carrier provisioning profile. The carrier provisioning profile may specify a policy and entitlements of how device 100 may use facilities and/or resources on device 100, and how it may interact with the network services operated by carrier 104.

Trusted authority 102 may be any person or organization, which is able to authorize code so that it can run on a computing device 100. Of course, a particular device 100 may have more than one trusted authority 102. In some embodiments, the trusted authority 102 may be an organization and/or entity which exercises control over the operating system and security model of the computing device 100.

As used herein, carrier 104 may be an entity or service provider that provides network access to computing devices 100. Well known examples of carriers 104 are mobile telephone service providers such as Verizon, AT&T, T-Mobile, Sprint, and the like.

As noted, activation service 106 may be the systems and processes used to provision devices 100. Activation service 106 may include one or more network applications and servers operating on network-connected computing devices that are configured to transmit provisioning data over a network.

In some embodiments, activation service 106 may transmit provisioning to a local application running on a personal computer. One or more of devices 100 may be coupled to the personal computer to receive the provisioning data via a provisioning application on the personal computer. Alternatively, computing device 100 may be shipped with basic functionality, which allows device 100 to connect to the carrier network to receive the provisioning data from activation service 106. Activation service 106 may also transmit provisioning data directly to devices 100, for example, via the network of carrier 104. Provisioning data may also be installed from a computer readable medium or on a storage device coupled to a server.

Figure 2 is a block diagram providing one example of how computing device 100 may be configured to utilize carrier profiles 208 to execute software modules 206 signed by an entity other than trusted authority 102, such as carrier 104 or their designated representative.

Software 106 may include one or more software modules 206 stored on, or accessible by, device 100. In one embodiment, storage 209 of computing device 100 can include a computer-readable storage medium (volatile and/or non-volatile) that may be configured to store one or both of software modules 206 and profiles 208. Storage 209 may also be configured to store code of operating system 202, and may further include general purpose storage for device 100. The software modules 206 may be stored temporarily in device 100 or permanently in device 100.

Computing device 100 may include an operating system. The operating system may be a well-known operating system, such as MacOS, Windows, Linux, Unix, Symbian, or the like. As discussed briefly above, a portion of the operation system, e.g., the kernel of operating system 202 may be configured to require that code executed on device 100 be authorized prior allowing it to be executed on the device. This authorization may take the form of trusted authority 102 digitally signing some or all of the software modules 206. In some embodiments, trusted authority 102 utilizes a code signing certificate, which may be used to verify the source and integrity of the signed computer code.

In some embodiments, computing devices 100 may also include development and test related software such as a debugging, tracing, or profiling software as part of a standard distribution installed on computing devices 100, as part of a pre-provisioning process, or at any other time. In some embodiments, computing devices 100 are pre-provisioned with such additional development related software. In other embodiments, development related software may be installed on the device with, or in conjunction with, access profiles.

Kernel space of memory used by operating system 202 conceptually may be considered a trusted space. The trust may be established by boot-time authentication of the kernel. In one embodiment, computing device 100 can include hardware support for providing the boot-time authentication of the kernel space used by operating system 202 and its contents. For example, in one embodiment, the boot loader of computing device 100 may authenticate a signature of the kernel software prior to loading and booting the kernel using, for example, suitable public key signature verification.

A digital signature may include a digest that may be created, for example, by performing a hash function on the software in order to create a message digest. In some embodiments, incremental code signing may be used. The hash value may be a hash value generated for all or a particular portion of the software. For example, in some embodiments, the software is divided into one or more units such as one or more pages. A hash value is generated for each unit or page of the software. The digest for the software in such embodiments includes a hash value that is generated for an array or table of the hash values of each code or page. The message digest may be then encrypted using a private encryption key associated with trusted authority 102. In one embodiment, the well known SHA-1 function may be used to generate the message digest. The encrypted message digest (also referred to as the signature) may be then appended to the one or more of the software modules 206.

In some embodiments, when a request is made on the device to execute software code, operating system 202 may process the request by verifying the source and integrity of the software code by validating the digital signature. If the source of the code is trusted authority 102, and the integrity of the code has not been compromised, operating system 202 may allow the code to run on computing device 100.

Computing device 100 may also include a device identifier 204. The device identifier 204 may take various forms. In one embodiment, device identifier 204 may be a serial number that uniquely identifies computing device 100. In other embodiments, device identifier 204 may be a unique identifier generated by operating system 202.

As noted above, computing device 100 may also have a carrier profile 208, created by trusted authority 102. Developer access profile 208 may include a set of data that indicates that certain devices are permitted to execute software not signed by trusted authority 102. In one embodiment, a carrier profile 208 allows carriers 104 to modify and/or provide their own software modules 206, without needing to request additional code signing services from trusted authority 102. Instead, carrier 104 may be permitted to digitally sign their software modules 206 and run the software on those computing devices 100, which have carrier profiles 208 that specify that code signed by carrier 104 may be executed on device 100. In some embodiments, the carrier profile may also specify certain operations that carrier 104 may perform executing software modules 206. Computing device 100 may also have more than one carrier profile 208.

In some embodiments, carrier profile 208 may operate in conjunction with policy service 210. Policy service 210 may take the form of a daemon or other process running in a user (untrusted) memory space of the operating system. Policy service 210 may be further configured to enforce policies specified in the carrier profile 208.

Policy service 210 may be initially started by operating system 202, which may verify a cryptographically secured digest of the service 210 before loading the service. Operating system 202 may maintain a reference to the service 210 via an interprocess communication or similar suitable port. Thus, while the profile service 210 executes in an untrusted or user-mode space, the code of the profile service 210 may be verified at execution to be signed by a trusted authority.

Figure 3 is a more detailed view of the carrier profile 208. As noted above, carrier profile 208 may be a set of data stored in the memory of device 100, which indicates that the device may be permitted to execute software even though it has not been signed by trusted authority 102. Carrier profile 208 can include device identifier data 302, carrier identifier data 304, and entitlement data 306.

Device identifier data 302 specifies one or more device identifiers 302 to, which the carrier profile 208 applies. In embodiments where the devices 100 are mobile telephone devices, device identifier data 302 may include an array of mobile telephone device serial numbers.

Device identifier data 302 for a carrier profile 208 may include one or more device identifiers 204 for different devices. In one embodiment, device identifiers 204 may be specific identifiers, which may be represented as numeric or alphanumeric data, for specific devices. In other embodiments, more generalized device identifying data may be utilized. For example, some device vendors and/or manufacturers may provide devices having device identifiers, which are specific to an organization. For example, a device vendor and/or manufacturer may customize certain aspects of device identifiers 204 associated with devices based on the organization to, which they are delivered.

Device identifier data 302 may include ranges of device identifiers, rather than listing each individual device identifier value. In still other embodiments, a bit mask or wild card characters may be used to specify that the carrier profile applies to all devices having specified identifier characteristics. In still other embodiments, device identifier data 302 may specify that carrier profile 208 applies to all devices. For example, in one such embodiment, software signed by one or more of the carriers identified in carrier identifier data 302 may be authorized to run on any device 100 upon, which the carrier profile 208 may be installed.

As noted, carrier profile 208 may further include carrier identifier data 304, which specifies carriers 104 to whom the carrier profile 208 applies. Carrier identifier data 304 may take various forms. In some embodiments, carrier identifier data 304 may be public keys associated with carriers 104 covered by the carrier profile 208. Other types of identifiers may also be used. In some embodiments, carrier identifier data 304 may be stored in an array data structure stored within the carrier profile. Of course, any suitable data structures may be used.

Furthermore, carrier profile 208 may include entitlement data 306. Entitlement data 306 may include data, which indicates the types of operations that are allowed for the software modules 206 signed by carriers identified in the carrier identifier data 304 on the devices 100 specified in device identifier data 302. A particular carrier profile 208 may specify more than one carrier 104 as being authorized to digitally sign code authorized by the carrier profile 208.

Entitlement data 306 may specify the types of access that are permitted for applications signed by the carriers 104 identified in the carrier identifier data 304 with respect to the devices 100 identified in device identifier data 302. The entitlement data 306 may take the form of key-value pairs. The values may include, for example, numeric, Boolean, or alphanumeric data. In one embodiment, the entitlement data 306 may include an array or other data structure of predefined Boolean variables, which are indicative of various specified entitlements.

In one embodiment, entitlement data 306 may include the capability to be executed. Other entitlements may control access to networking resources of device 100, data, libraries, or applications that have security or privacy implications such as address book data. In addition, other entitlements may control access to particular carrier APIs including telephony, networking, address or phone storage, or multimedia APIs.

Figure 4 is a block diagram illustrating illustrates relationships between events that occur when a request may be received and processed by the system between software components of one embodiment of computing device 100. As shown, in event 1, operating system 202, which can include a trusted space, may receive a request (in response to a user request to execute the particular software module 206 or in response to a request of another software component on device 100 to execute the particular software module 206) to executed an identified software module 206. In one embodiment, the request can include a reference to a directory or file of the storage 209, which stores the executable instruction code of software module 206.

In event 2, operating system 202 may communicate a request to authenticate software module 206 to policy service 210. In one embodiment, the authentication request can include the reference to the storage location in storage 209 associated with software module 206. Operating system 202 may also provide a digest of at least a portion of software module 206 to policy service 210. Alternatively, or in addition, policy service 210 may generate a digest of all or a portion of software module 206. In one embodiment, the digest may be based on digest values determined for each code page or each file associated with software module 206. In one embodiment, requests to policy service 210 may include other data such as specific entitlements that are to be enforced.

For example, operating system 202 may specify that the entitlement may be an entitlement to execute or to access specified system resources. Operating system 202 or another portion of the operating system of device 100 may be configured to request entitlement authorization for access to specific networks such as a mobile telephone network, a Bluetooth stack, or to specific capabilities of device 100 such as to access a microphone, speaker, camera, or other I/O interface of device 100.

At event 5, policy service 210 may access one or more profiles 208 associated with execution of software module 206. In one embodiment, the profiles are accessed from storage 209. In one embodiment, profiles 208 include a particular profile associated with carrier 104. It may be to be recognized that while profiles are described herein with respect to carriers 104 other than trusted authority 102, access to software modules provided by trusted authority 102, e.g., the device or operating system developer, may also be controlled using the systems and methods described herein.

At event 5, policy service 210 may verify the execution rights of software module 206 based on the digest and/or profile 208. For example, policy service 210 may be configured to receive a signature associated with the digest of software module 206 and cryptographically verify the digest. In one embodiment, policy service 210 may use a public key associated with a particular carrier 104, and, which may be included as part of profile 208, to verify the signature of the digest.

In one embodiment, to ensure that the profile and the carrier key may be trusted, policy service 210 cryptographically verifies that the profile may be trusted by trusted authority 102. In this embodiment, policy service 210 may verify the profile by verifying a digest or other signature of the profile (and its contents) using a public key of trusted authority 102 that may be stored on device 100 or otherwise accessed, e.g., via a data network, by device 100.

Policy service 210 may be further configured to verify that software module 206 may be authorized for the particular device 100. For example, in one embodiment, profile 208 can include one or more device identifiers or data for matching device identifiers (e.g., a mask or wildcard to match a specified group of devices 100).

Policy service 210 may compare the identifiers to an identifier securely maintained by device 100 and authorizes the software module when the identifier data of the policy 208 matches that of device 100. The device identifier may include any data stored on the device that may be used for identification including a manufacturer serial number, device or subscriber identifiers of a mobile telephone device such as an Integrated Circuit Card ID (ICCID), International Mobile Subscriber Identifier (IMSI) of a SIM card currently inserted into device 100, the International Mobile Equipment Identifier (IMEI) encoded on the device, an electronic serial number (ESN), or any other data suitable to identify the devices 100 for, which a particular software module 206 may be authorized.

Policy service 210 may be configured to authorize software module 206 based on further entitlements or other capabilities as specified by profiles 208. Executable or not-executable may be considered as an example of am entitlement. Other entitlements may specify whether the particular software module 206 may execute or access services based on one or more of profiles 208 and on any other policy that policy service 210 may be configured to enforce.

Policy service 210 may be configured to execute in user space such that the policies and profiles enforced therein may be arbitrarily complex and subject to update without increasing the size of the kernel or other protected memory spaces and be more easily developed and revised without the difficulties generally associated with kernel programming.

It is to be recognized that while Figure 5 illustrates an example of operating system 202 determining whether a particular software module 206 has an entitlement to be executed, the methods and systems described herein may be used to authorize access to device hardware capabilities, other services of the kernel, other operating system services, or services of another software module 208.

Entitlements may be enforced via one or more policies associated with the device. For example, a policy for enforcing entitlements may include processing entitlement data in profiles as a white list, e.g., software module 206 may be authenticated for a particular such entitlement when profile 208 can include data indicating that entitlement exists for the particular software module 206 and/or the particular device 100. Another policy may enforce entitlements based on a blacklist, e.g., software module 206 may be authenticated for a particular such entitlement unless profile 208 or applicable policy can include data negating that entitlement for the particular software module 206 and/or the particular device 100. In another embodiment, device 100 may be configured with a policy such that some entitlements may be configured to be enforced via a white list while others are configured to be enforced via a blacklist.

Other policies may be included to more finely control particular entitlements or to resolve conflicting profile data. For example, in one embodiment, a mobile service provider may include a particular carrier profile 208 in devices for use on its network that further specifies entitlements to particular device capabilities, e.g., voice network or dialer access, which may conflict with the carrier profile 208 for particular software modules 206. In such an event, a policy of device 100 may specify that the entitlement specification of one of the profiles controls.

Profiles 208 from carrier 104 may be received and stored on the device 100 when the device 100 is activated or provisioned by carrier 104 for the device configured to use the carrier's network. In one embodiment, carrier profile 208 may be provided by a SIM card of the carrier or downloaded to device 100 in response to insertion of the SIM card. In one embodiment, carrier profile 208 may comprise a blacklist of entitlements that override or limit entitlements that may otherwise be provided for some or all software modules 206. The carrier profile 208 may include data indicative of SIM cards such that if the SIM card of the device 100 is changed so as to not match the indicated data, the carrier profile is not authenticated. The service provider or carrier profile 208 may be, in one embodiment, signed by with a digital signature of carrier 104, which is in turn signed by the digital signal of the trusted authority 102.

Policy service 210 may include a rules engine or other logic to resolve conflicts between service provider, manufacturer, and software module profiles and entitlements. In one embodiment, carrier profile 208 can override the software module profiles which may in turn override or extend the manufacturer profile. Thus, for example, a manufacturer profile may allow software modules 206 to access a service such as a network stack. A particular software module 206 may be further authenticated to access the network stack. However, carrier profile 208 may include data indicative of blacklisting or otherwise denying access to the network stack for specified carrier profiles or for all carrier profiles. Policy service 210 may resolve these complexities in a user space process so as to minimize such logic in the kernel of operating system 202.

In event 6, when policy service 210 may verify the entitlements and/or other execution rights of the software module 240, policy service 210 provides operating system 202 or other client of policy service 210 with data indicative of the entitlements of software module 206 and/or the entitlements for, which the request to authenticate was made. In event 7, operating system 202 may then execute software module 206 in accordance with the entitlement data received from policy service 210.

Figure 5 is a flowchart illustrating one embodiment of a method 500 of verifying entitlements of software modules 206 in devices 100. The method may begin at a block 502 in, which a trusted space of operating system 202 receives a request to execute a particular software module 206. In one embodiment, the trusted space may be established on startup of the device by a bootloader of device 100 that cryptographically verifies operating system 202 prior to loading.

In block 504, the trusted space process communicates data indicative of software module 206 to policy service 210 executing in untrusted space, but to, which trust has been granted upon initial execution of policy service 210. The data may include a reference to a storage location of software module 206 and, optionally, data indicative of a particular entitlement being authenticated.

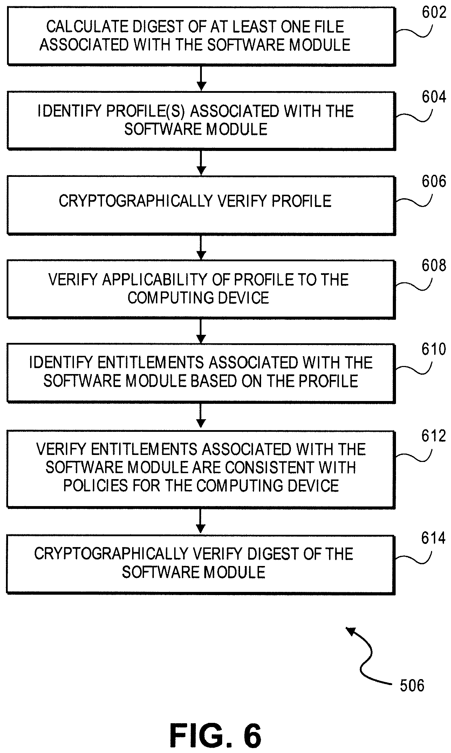

Next at block 506, policy service 210 authenticates software module 206. In one embodiment, policy service 210 authenticates software module 206 based on cryptographic authentication. For example, policy service 210 may authenticate software module 206 by verifying a digital signature of software module 206 using suitable cryptographic techniques such as asymmetric/public key encryption. Further, one or more entitlements associated with software module 206 may be authenticated similar cryptographic techniques. Further details of block 506 may be found with reference to Figure 6.

Proceeding to block 508, policy service 210 communicates data indicative of execution rights of the software module to the kernel of operating system 202. The data may include a Boolean authentication response, data indicative of one or more entitlements of software module 206, a verified digest of software module 206, or any other suitable data relative to the request.

In block 510, operating system 202 or other trusted process may then execute software module 206 or may perform services for software module 206 based on the authenticated entitlements.

Figure 6 is a flowchart illustrating block 506 of the method of Figure 5 in more detail. At block 602, policy service 210 may calculate a digest of at least one file or other data structure associated with the executable code of software module 206. The digest may be calculated using any suitable hash algorithm, including, for example, SHA-1.

In block 604, policy service 210 may identify one or more profiles 208 associated with software module 206 and/or device 100. In one embodiment, profiles 208 can each include a signing key and data indicative of entitlements of software module 206. For example, an entitlement may include a data structure in tabular form such as illustrated in Table 1.

**Table 1. Example Profile Data**

| | |
|---|---|
| Developer Signing Key | 123555 |
| Device ID1 | 123FFF |
| Device ID2 | 123FFF |
| Executable | TRUE |
| Debuggable | FALSE |
| Can_Access_Network | TRUE |
| Code Digest | AAFF1144BB |

Software modules 206 may be associated with profiles 208 via key-value pairs of the profile that identify the digest (e.g., the "Code Digest" illustrated in Table 1) of software module 206. Profile 208 may further include a digital signature, e.g., a digest of the profile cryptographically signed by, for example, trusted authority 102. Next at a block 606, policy service 210 cryptographically verifies profile 208, e.g., by verifying that the cryptographic signature of the digest of profile 208 may be correct.

Moving to block 608, policy service 210 verifies that profile 208 may be applicable to the particular device 100. In one embodiment, the verifying may include comparing the device identifier 204 of the particular device 100 to the device identifiers listed in the signed profile 208. The previous signature verification at the block 606 may provide assurance that the device identified in profile 208 have not been changed or modified without authorization.

Next at block 610, policy service 210 may identify execution rights associated with software module 206 based on profile(s) 208. In one embodiment, the identifying can include accessing the entitlements of each profile.

In block 612, policy service 210 may verify that the entitlements to be verified for software module 206 are consistent with policies for computing device 100. In one embodiment, the verifying can include determining whether the requested entitlement may be included in profiles 208 associated with software module 206 and policies of device 100.

Proceeding to block 614, policy service 210 may then compare the digest value calculated at the block 602 to the signed digest of software module 206 and verify the cryptographic signature of the digest. It is to be recognized that depending on the embodiment, certain acts or events of any of the methods described herein can be performed in a different sequence, may be added, merged, or left out all together (e.g., not all described acts or events are necessary for the practice of the method). Moreover, in certain embodiments, acts or events may be performed concurrently, e.g., through multi-threaded processing, interrupt processing, or multiple processors, rather than sequentially.

Figure 7 is a block diagram illustrating an example of one of the devices 100 embodied as a mobile device. Device 100 can include a processor 702 that may be in communication with a memory 704. The network interface 706 can include a receiver 724 and transmitter 726 configured to communicate via signals according to one or more suitable data and/or voice communication systems. For example, network interface 708 may be communicate to communicate voice and/or data over mobile telephone networks such as GSM, CDMA, CDMA2000, EDGE or, UMTS. Network interface 706 may further include receiver/transmitters for other data networks including, for example, any IEEE 802.x network such as WiFi or Bluetooth.

Device 100 may also include one or more of display 710, user input device 712 such as a key, touch screen, or other suitable tactile input device, loudspeaker 714 comprising a transducer adapted to provide audible output based on a signal received over communication link 106 and/or microphone 716 comprising a transducer adapted to provide audible input of a signal that may be transmitted over one or both of the communication links 106 and 108.

In one embodiment, input device 712 can include an accelerometer or other device configured to detect movement of the device. Device 100 may optionally include a battery 731 to provide power to one or more components of device 100. Device 100 may include at least one of a mobile handset, a personal digital assistant, a laptop computer, a headset, a vehicle hands free device, or any other electronic device. For example, one or more aspects taught herein may be incorporated into a phone (e.g., a mobile phone), a personal data assistant ("PDA"), an entertainment device (e.g., a music or video device), a headset (e.g., headphones, an earpiece, etc.), a microphone, or any other electronic device. As described further below, in some embodiments, the device 100 is implemented as a mobile device.

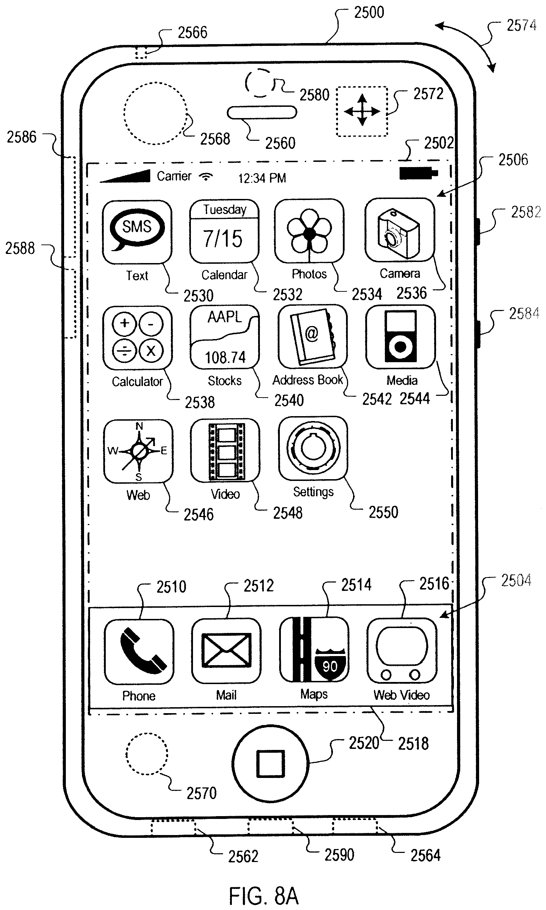

FIG. 8A illustrates an example mobile device 2500. The mobile device 2500 can be, for example, a handheld computer, a personal digital assistant, a cellular telephone, a network appliance, a camera, a smart phone, an enhanced general packet radio service (EGPRS) mobile phone, a network base station, a media player, a navigation device, an email device, a game console, or a combination of any two or more of these data processing devices or other data processing devices.

### Mobile Device Overview

In some implementations, the mobile device 2500 includes a touch-sensitive display 2502. The touch-sensitive display 2502 can be implemented with liquid crystal display (LCD) technology, light emitting polymer display (LPD) technology, or some other display technology. The touch-sensitive display 2502 can be sensitive to haptic and/or tactile contact with a user.

In some implementations, the touch-sensitive display 2502 can comprise a multi-touch-sensitive display 2502. A multi-touch-sensitive display 2502 can, for example, process multiple simultaneous touch points, including processing data related to the pressure, degree, and/or position of each touch point. Such processing facilitates gestures and interactions with multiple fingers, chording, and other interactions. Other touch-sensitive display technologies can also be used, e.g., a display in which contact is made using a stylus or other pointing device. Some examples of multi-touch-sensitive display technology are described in U.S. Patent Nos. 6,323,846, 6,570,557, 6,677,932, and 6,888,536, each of which is incorporated by reference herein in its entirety.

In some implementations, the mobile device 2500 can display one or more graphical user interfaces on the touch-sensitive display 2502 for providing the user access to various system objects and for conveying information to the user. In some implementations, the graphical user interface can include one or more display objects 2504, 2506. In the example shown, the display objects 2504, 2506, are graphic representations of system objects. Some examples of system objects include device functions, applications, windows, files, alerts, events, or other identifiable system objects.

### Example Mobile Device Functionality

In some implementations, the mobile device 2500 can implement multiple device functionalities, such as a telephony device, as indicated by a Phone object 2510; an e-mail device, as indicated by the Mail object 2512; a map devices, as indicated by the Maps object 2514; a Wi-Fi base station device (not shown); and a network video transmission and display device, as indicated by the Web Video object 2516. In some implementations, particular display objects 2504, e.g., the Phone object 2510, the Mail object 2512, the Maps object 2514, and the Web Video object 2516, can be displayed in a menu bar 2518. In some implementations, device functionalities can be accessed from a top-level graphical user interface, such as the graphical user interface illustrated in FIG. 8A. Touching one of the objects 2510, 2512, 2514, or 2516 can, for example, invoke a corresponding functionality.

In some implementations, the mobile device 2500 can implement a network distribution functionality. For example, the functionality can enable the user to take the mobile device 2500 and provide access to its associated network while traveling. In particular, the mobile device 2500 can extend Internet access (e.g., Wi-Fi) to other wireless devices in the vicinity. For example, mobile device 2500 can be configured as a base station for one or more devices. As such, mobile device 2500 can grant or deny network access to other wireless devices.

In some implementations, upon invocation of a device functionality, the graphical user interface of the mobile device 2500 changes, or is augmented or replaced with another user interface or user interface elements, to facilitate user access to particular functions associated with the corresponding device functionality. For example, in response to a user touching the Phone object 2510, the graphical user interface of the touch-sensitive display 2502 may present display objects related to various phone functions; likewise, touching of the Mail object 2512 may cause the graphical user interface to present display objects related to various e-mail functions; touching the Maps object 2514 may cause the graphical user interface to present display objects related to various maps functions; and touching the Web Video object 2516 may cause the graphical user interface to present display objects related to various web video functions.

In some implementations, the top-level graphical user interface environment or state of FIG. 8A can be restored by pressing a button 2520 located near the bottom of the mobile device 2500. In some implementations, each corresponding device functionality may have corresponding "home" display objects displayed on the touch-sensitive display 2502, and the graphical user interface environment of FIG. 8A can be restored by pressing the "home" display object.

In some implementations, the top-level graphical user interface can include additional display objects 2506, such as a short messaging service (SMS) object 2530, a Calendar object 2532, a Photos object 2534, a Camera object 2536, a Calculator object 2538, a Stocks object 2540, a Address Book object 2542, a Media object 2544, a Web object 2546, a Video object 2548, a Settings object 2550, and a Notes object (not shown). Touching the SMS display object 2530 can, for example, invoke an SMS messaging environment and supporting functionality; likewise, each selection of a display object 2532, 2534, 2536, 2538, 2540, 2542, 2544, 2546, 2548, and 2550 can invoke a corresponding object environment and functionality.

Additional and/or different display objects can also be displayed in the graphical user interface of FIG. 8A. For example, if the device 2500 is functioning as a base station for other devices, one or more "connection" objects may appear in the graphical user interface to indicate the connection. In some implementations, the display objects 2506 can be configured by a user, e.g., a user may specify which display objects 2506 are displayed, and/or may download additional applications or other software that provides other functionalities and corresponding display objects.

In some implementations, the mobile device 2500 can include one or more input/output (I/O) devices and/or sensor devices. For example, a speaker 2560 and a microphone 2562 can be included to facilitate voice-enabled functionalities, such as phone and voice mail functions. In some implementations, an up/down button 2584 for volume control of the speaker 2560 and the microphone 2562 can be included. The mobile device 2500 can also include an on/off button 2582 for a ring indicator of incoming phone calls. In some implementations, a loud speaker 2564 can be included to facilitate hands-free voice functionalities, such as speaker phone functions. An audio jack 2566 can also be included for use of headphones and/or a microphone.

In some implementations, a proximity sensor 2568 can be included to facilitate the detection of the user positioning the mobile device 2500 proximate to the user's ear and, in response, to disengage the touch-sensitive display 2502 to prevent accidental function invocations. In some implementations, the touch-sensitive display 2502 can be turned off to conserve additional power when the mobile device 2500 is proximate to the user's ear.

Other sensors can also be used. For example, in some implementations, an ambient light sensor 2570 can be utilized to facilitate adjusting the brightness of the touch-sensitive display 2502. In some implementations, an accelerometer 2572 can be utilized to detect movement of the mobile device 2500, as indicated by the directional arrow 2574. Accordingly, display objects and/or media can be presented according to a detected orientation, e.g., portrait or landscape. In some implementations, the mobile device 2500 may include circuitry and sensors for supporting a location determining capability, such as that provided by the global positioning system (GPS) or other positioning systems (e.g., systems using Wi-Fi access points, television signals, cellular grids, Uniform Resource Locators (URLs)). In some implementations, a positioning system (e.g., a GPS receiver) can be integrated into the mobile device 2500 or provided as a separate device that can be coupled to the mobile device 2500 through an interface (e.g., port device 2590) to provide access to location-based services.

In some implementations, a port device 2590, e.g., a Universal Serial Bus (USB) port, or a docking port, or some other wired port connection, can be included. The port device 2590 can, for example, be utilized to establish a wired connection to other computing devices, such as other communication devices 2500, network access devices, a personal computer, a printer, a display screen, or other processing devices capable of receiving and/or transmitting data. In some implementations, the port device 2590 allows the mobile device 2500 to synchronize with a host device using one or more protocols, such as, for example, the TCP/IP, HTTP, UDP and any other known protocol.

The mobile device 2500 can also include a camera lens and sensor 2580. In some implementations, the camera lens and sensor 2580 can be located on the back surface of the mobile device 2500. The camera can capture still images and/or video.

The mobile device 2500 can also include one or more wireless communication subsystems, such as an 802.11b/g communication device 2586, and/or a Bluetooth™ communication device 2588. Other communication protocols can also be supported, including other 802.x communication protocols (e.g., WiMax, Wi-Fi, 3G), code division multiple access (CDMA), global system for mobile communications (GSM), Enhanced Data GSM Environment (EDGE), etc.

### Example Configurable Top-Level Graphical User Interface

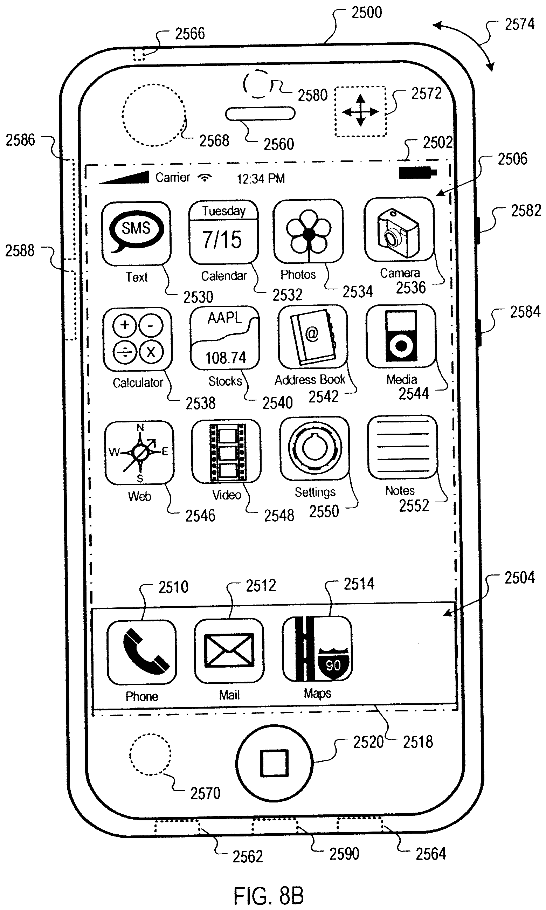

FIG. 8B illustrates another example of configurable top-level graphical user interface of device 2500. The device 2500 can be configured to display a different set of display objects.

In some implementations, each of one or more system objects of device 2500 has a set of system object attributes associated with it; and one of the attributes determines whether a display object for the system object will be rendered in the top-level graphical user interface. This attribute can be set by the system automatically, or by a user through certain programs or system functionalities as described below. FIG. 8B shows an example of how the Notes object 2552 (not shown in FIG. 8A) is added to and the Web Video object 2516 is removed from the top graphical user interface of device 2500 (e.g. such as when the attributes of the Notes system object and the Web Video system object are modified).

### Example Mobile Device Architecture

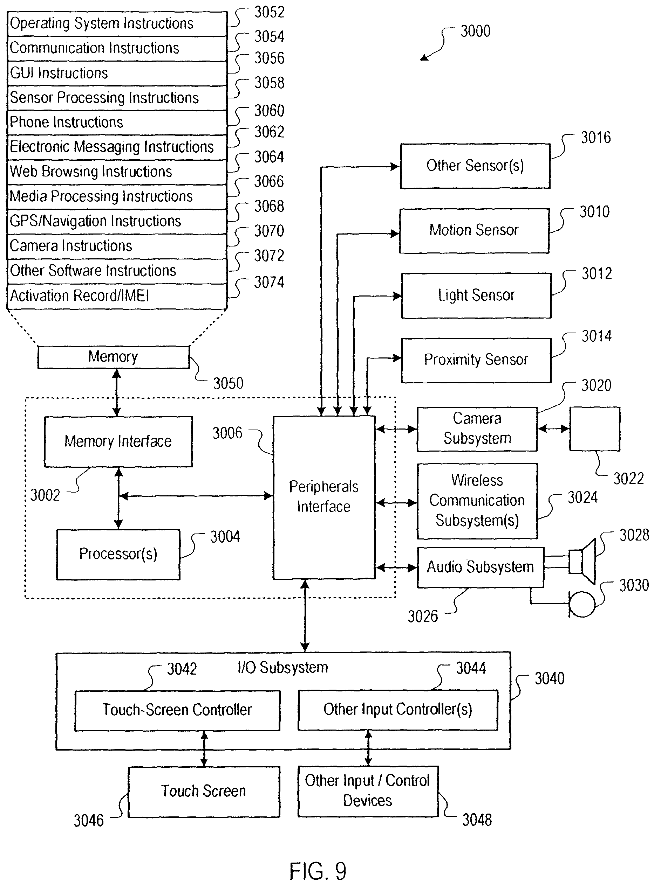

FIG. 9 is a block diagram 3000 of an example implementation of a mobile device (e.g., mobile device 2500). The mobile device can include a memory interface 3002, one or more data processors, image processors and/or central processing units 3004, and a peripherals interface 3006. The memory interface 3002, the one or more processors 3004 and/or the peripherals interface 3006 can be separate components or can be integrated in one or more integrated circuits. The various components in the mobile device can be coupled by one or more communication buses or signal lines.

Sensors, devices, and subsystems can be coupled to the peripherals interface 3006 to facilitate multiple functionalities. For example, a motion sensor 3010, a light sensor 3012, and a proximity sensor 3014 can be coupled to the peripherals interface 3006 to facilitate the orientation, lighting, and proximity functions described with respect to FIG. 8A. Other sensors 3016 can also be connected to the peripherals interface 3006, such as a positioning system (e.g., GPS receiver), a temperature sensor, a biometric sensor, or other sensing device, to facilitate related functionalities.

A camera subsystem 3020 and an optical sensor 3022, e.g., a charged coupled device (CCD) or a complementary metal-oxide semiconductor (CMOS) optical sensor, can be utilized to facilitate camera functions, such as recording photographs and video clips.

Communication functions can be facilitated through one or more wireless communication subsystems 3024, which can include radio frequency receivers and transmitters and/or optical (e.g., infrared) receivers and transmitters. The specific design and implementation of the communication subsystem 3024 can depend on the communication network(s) over which the mobile device is intended to operate. For example, a mobile device can include communication subsystems 3024 designed to operate over a GSM network, a GPRS network, an EDGE network, a Wi-Fi or WiMax network, and a Bluetooth™ network. In particular, the wireless communication subsystems 3024 may include hosting protocols such that the mobile device may be configured as a base station for other wireless devices.

An audio subsystem 3026 can be coupled to a speaker 3028 and a microphone 3030 to facilitate voice-enabled functions, such as voice recognition, voice replication, digital recording, and telephony functions.

The I/O subsystem 3040 can include a touch screen controller 3042 and/or other input controller(s) 3044. The touch-screen controller 3042 can be coupled to a touch screen 3046. The touch screen 3046 and touch screen controller 3042 can, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen 3046.

The other input controller(s) 3044 can be coupled to other input/control devices 3048, such as one or more buttons, rocker switches, thumb-wheel, infrared port, USB port, and/or a pointer device such as a stylus. The one or more buttons (not shown) can include an up/down button for volume control of the speaker 3028 and/or the microphone 3030.

In one implementation, a pressing of the button for a first duration may disengage a lock of the touch screen 3046; and a pressing of the button for a second duration that is longer than the first duration may turn power to the mobile device on or off. The user may be able to customize a functionality of one or more of the buttons. The touch screen 3046 can, for example, also be used to implement virtual or soft buttons and/or a keyboard.

In some implementations, the mobile device can present recorded audio and/or video files, such as MP3, AAC, and MPEG files. In some implementations, the mobile device can include the functionality of an MP3 player, such as an iPod™. The mobile device may, therefore, include a 32-pin connector that is compatible with the iPod™. Other input/output and control devices can also be used.

The memory interface 3002 can be coupled to memory 3050. The memory 3050 can include high-speed random access memory and/or non-volatile memory, such as one or more magnetic disk storage devices, one or more optical storage devices, and/or flash memory (e.g., NAND, NOR). The memory 3050 can store an operating system 3052, such as Darwin, RTXC, LINUX, UNIX, OS X, WINDOWS, or an embedded operating system such as VxWorks. The operating system 3052 may include instructions for handling basic system services and for performing hardware dependent tasks. In some implementations, the operating system 3052 can be a kernel (e.g., UNIX kernel).

The memory 3050 may also store communication instructions 3054 to facilitate communicating with one or more additional devices, one or more computers and/or one or more servers. The memory 3050 may include graphical user interface instructions 3056 to facilitate graphic user interface processing; sensor processing instructions 3058 to facilitate sensor-related processing and functions; phone instructions 3060 to facilitate phone-related processes and functions; electronic messaging instructions 3062 to facilitate electronic-messaging related processes and functions; web browsing instructions 3064 to facilitate web browsing-related processes and functions; media processing instructions 3066 to facilitate media processing-related processes and functions; GPS/Navigation instructions 3068 to facilitate GPS and navigation-related processes and instructions; camera instructions 3070 to facilitate camera-related processes and functions; and/or other software instructions 3072 to facilitate other processes and functions. The memory 3050 may also store other software instructions (not shown), such as web video instructions to facilitate web video-related processes and functions; and/or web shopping instructions to facilitate web shopping-related processes and functions. In some implementations, the media processing instructions 3066 are divided into audio processing instructions and video processing instructions to facilitate audio processing-related processes and functions and video processing-related processes and functions, respectively. An activation record and International Mobile Equipment Identity (IMEI) 3074 or similar hardware identifier can also be stored in memory 3050.

In view of the above, one will recognize that embodiments overcome problems that may include enforcing execution profiles so as to allow carriers to develop and test applications in an execution environment where applications are generally provided by one or more other trusted entities. In addition, device providers, such as enterprises, may be provided the flexibility to distribute custom developed applications without distributing such applications via the trusted entities.

Those of skill will recognize that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

While the above detailed description has shown, described, and pointed out novel features of the invention as applied to various embodiments, it will be understood that various omissions, substitutions, and changes in the form and details of the device or process illustrated may be made by those skilled in the art. As will be recognized, the present invention may be embodied within a form that does not provide all of the features and benefits set forth herein, as some features may be used or practiced separately from others. The scope of the invention is indicated by the appended claims rather than by the foregoing description. All changes, which come within the meaning and range of equivalency of the claims are to be embraced within their scope. Although the invention can be defined as stated in the attached claims, it is to be understood that the present invention can alternatively also be defined as stated in the following embodiments:

### Embodiments

1. A method of authorizing software, the method comprising: receiving, in a trusted space of a processor, a request to execute a software module stored on the electronic device; communicating data indicative of the software module to a service executing in an untrusted space of the processor; authenticating at least one profile of a service provider associated with the device by the service; authenticating at least one entitlement of the software module by the service, wherein authenticating the at least one entitlement is based at least in part on the profile of the service provider; communicating data indicative of the authenticated entitlement to the trusted space; and executing the software module based on the entitlement.
2. The method of embodiment 1, wherein the service executing in the untrusted space comprises a process executing in a user process of the processor.
3. The method of embodiment 1, wherein the at least one profile of the service provider comprises one or more entitlements that are disallowed for the software module.
4. The method of embodiment 1, wherein the software module comprises at least of an application program or shared library.
5. The method of embodiment 1, wherein the data indicative of the software module comprises a reference to at least a portion of the executable instructions associated with the software module.
6. The method of embodiment 5, wherein authenticating at least one entitlement comprises calculating a digest indicative of the portion.
7. The method of embodiment 6, wherein calculating the digest indicative of at least a portion of the software module comprises generating a digest value indicative of a plurality of digest values indicative of respective portions of the software module.
8. The method of embodiment 6, wherein the digest comprises a SHA-1 hash indicative of the at least one portion.
9. The method of embodiment 6, wherein authenticating the at least one entitlement of the software module comprises authenticating a cryptographic signature of the digest based on a cryptographic key of an entity associated with the software module.
10. The method of embodiment 9, wherein authenticating the cryptographic signature of the digest comprises: calculating a cryptographic signature of the digest based on a public key of the trusted entity; and comparing the calculated signature with a signature stored in association with the at least one file.
11. The method of embodiment 9, wherein authenticating the at least one entitlement of the software module comprises: identifying a profile associated with the software module, wherein the profile comprises data indicative of at least one device identifier; authenticating the profile based on a cryptographic key of the entity; comparing the device identifier of the profile to a device identifier of the electronic device; and authenticating the entitlement based on the comparing.
12. The method of embodiment 11, wherein the profile of the software module further comprises data indicative of at least one entitlement and wherein the authenticating the at least one entitlement of the software module comprises authenticating the entitlement of the software module when the entitlement of the software module is consistent with entitlement data of the profile.
13. The method of embodiment 1, wherein authenticating the at least one profile of the service provider comprises: identifying the profile associated with the service provider; and authenticating the profile based on a cryptographic key of the service provider.
14. The method of embodiment 1 , wherein the profile comprises data indicative of at least one entitlement of the service provider and wherein authenticating the at least one entitlement of the software module comprises determining whether the entitlement of the software module is consistent with entitlement data of the profile of the service provider.
15. The method of embodiment 1, wherein the entitlement of the software module comprises at least one or more of an allow debugging entitlement, an allow trace entitlement, an allow access to address book data entitlement, or allow access to multimedia API entitlement.
16. A computer readable medium comprising data indicative of codes executable by at least one processor of an electronic device to perform a process comprising: receiving, in a trusted space of a processor, a request to execute a software module stored on the electronic device; communicating data indicative of the software module to a service executing in an untrusted space of the processor; authenticating at least one profile of a service provider associated with the device by the service; authenticating at least one entitlement of the software module by the service, wherein authenticating the at least one entitlement is based at least in part on the profile of the service provider; communicating data indicative of the authenticated entitlement to the trusted space; and executing the software module based on the entitlement.
17. A device comprising: a storage configured to: store a software module for execution on the electronic device; and store at least one profile comprising at least one entitlement associated with the software module; and at least one processor configured to: receive, by a process executing in a trusted space of the processor, a request to execute the software module; communicate data indicative of the software module to a service executing in an untrusted space of the processor; authenticate at least one profile of a service provider associated with the device by the service; authenticate at least one entitlement of the software module by the service, wherein authenticating the at least one entitlement is based at least in part on the profile of the a service provider; communicate data indicative of the authenticated entitlement to the trusted space process; and execute the software module based on the entitlement.
18. The device of embodiment 17, wherein the trusted space comprises an operating system kernel executing in a trusted mode on the processor of the device and the service executing in the untrusted space comprises a process executing in a user mode process of the processor.
19. The device of embodiment 17, wherein the software module comprises at least of an application program or shared library.
20. The device of embodiment 17, wherein the at least one profile of the service provider comprises one or more entitlements that are disallowed the software module.
21. The device of embodiment 17, wherein the data indicative of the software module comprises a reference to at least a portion of the executable instructions associated with the software module.
22. The device of embodiment 21, wherein, so as to authenticate the cryptographic signature of the digest, the processor is further configured to calculate a digest indicative of the portion.
23. The device of embodiment 22, wherein to calculate the digest, the processor is configured to generate a digest value indicative of a plurality of digest values indicative of respective portions of the software module.
24. The device of embodiment 22, wherein the digest comprises a SHA-1 hash indicative of the at least one portion.
25. The device of embodiment 22, wherein, so as to authenticate the cryptographic signature of the digest, the processor is further configured to authenticate a cryptographic signature of the digest based on a cryptographic key of an entity associated with the software module.
26. The device of embodiment 25, wherein, so as to authenticate the cryptographic signature of the digest, the processor is further configured to: calculate a cryptographic signature of the digest based on a public key of the trusted entity; and compare the calculated signature with a signature stored in association with the at least one file.
27. The device of embodiment 25, wherein, so as to authenticate the cryptographic signature of the digest, the processor is further configured to: identify a profile associated with the software module, wherein the profile comprises data indicative of at least one device identifier; authenticate the profile based on a cryptographic key of the entity; compare the device identifier of the profile to a device identifier of the electronic device; and authenticate the entitlement based on a result of the comparing.
28. The device of embodiment 27, wherein the profile of the software module further comprises data indicative of at least one entitlement and wherein the authenticating the at least one entitlement of the software module comprises authenticating the entitlement of the software module when the entitlement of the software module is consistent with entitlement of the profile.
29. The device of embodiment 17, wherein so as to authenticate the at least one profile of the service provider, the processor is further configured to: identify the profile associated with the service provider; and authenticate the profile based on a cryptographic key of the service provider.
30. The device of embodiment 17, wherein the profile comprises data indicative of at least one entitlement of the service provider and wherein authenticating the at least one entitlement of the software module comprises determining whether the entitlement of the software module is consistent with entitlement data of the profile of the service provider.
31. The device of embodiment 17, wherein the entitlement of the software module comprises at least one or more of an allow debugging entitlement, an allow trace entitlement, an allow access to address book data entitlement, or allow access to multimedia API entitlement.

## Claims

1. A computing system comprising:
a storage device configured to store a software module for execution on computing system and at least one profile for a mobile telephone network service provider;
means for receiving, by a kernel executing in a trusted space of an operating system executing on a processor, a request to execute the software module to test the software module;
means for communicating, by the kernel, data indicative of the software module to a policy service executing in an untrusted space of the operating system executing on the processor;
means for obtaining, by the policy service, a digest generated from at least one portion of executable instructions for the software module;
means for identifying, by the policy service, the at least one profile for the mobile telephone network service provider that controls access to a mobile telephone network, the at least one profile obtained from the mobile telephone network service provider and comprising an identifier for the mobile telephone network service provider, an identifier for the electronic device, and entitlement data indicative of types of operations allowed by the mobile telephone network service provider for software executing on the electronic device that accesses the mobile telephone network;
means for authenticating, by the policy service, the at least one profile for the mobile telephone network service provider;
means for authenticating, by the policy service, at least one entitlement associated with the software module based at least in part on the entitlement data associated with the profile of the mobile telephone network service provider and the digest;
means for communicating, by the policy service, the at least one entitlement to the kernel;
means for allowing, by the kernel, execution of one or more types of operations by the software module on the processor based on the at least one entitlement; and
means for disallowing, by the kernel, execution of one or more types of operations by the software module on the processor based on the at least one entitlement.

2. The computing system of claim 1, wherein the data indicative of the software module comprises a reference to at least a portion of the executable instructions associated with the software module.

3. The computing system of claim 2, wherein the authenticating means authenticates a cryptographic signature of the digest based on a cryptographic key of an entity associated with the software module.

4. A method of authorizing software on an electronic device, the method comprising:
receiving, by the kernel executing in a trusted space of an operating system executing on a processor, a request to execute a software module stored on the electronic device to test the software module;
communicating, by the kernel, data indicative of the software module to a policy service executing in an untrusted space of the operating system executing on the processor;
obtaining, by the policy service, a digest generated from at least one portion of executable instructions for the software module;
identifying, by the policy service, at least one profile for a mobile telephone network service provider that controls access to a mobile telephone network, the at least one profile obtained from the mobile telephone network service provider and comprising an identifier for the mobile telephone network service provider, an identifier for the electronic device, and entitlement data indicative of types of operations allowed by the mobile telephone network service provider for software executing on the electronic device that accesses the mobile telephone network;
authenticating, by the policy service, the at least one profile for the mobile telephone network service provider;
authenticating, by the policy service, at least one entitlement associated with the software module based at least in part on the entitlement data associated with the profile of the mobile telephone network service provider and the digest;
communicating, by the policy service, the at least one entitlement to the kernel;
allowing, by the kernel, execution of one or more types of operations by the software module on the processor based on the at least one entitlement; and
disallowing, by the kernel, execution of one or more types of operations by the software module on the processor based on the at least one entitlement.

5. The method of claim 4, wherein the service executing in the untrusted space comprises a process executing in a user process of the processor.

6. The method of claim 4, wherein the software module comprises at least of an application program or shared library.

7. The method of claim 4, wherein the data indicative of the software module comprises a reference to at least a portion of the executable instructions associated with the software module.

8. A computing device comprising:
a storage device configured to:
store a software module for execution on the electronic device; and
store at least one profile for a mobile telephone network service provider; and at least one processor configured to:
receive, by a kernel executing in a trusted space of an operating system executing on the processor, a request to execute the software module to test the software module;
communicate, by the kernel, data indicative of the software module to a policy service executing in an untrusted space of the operating system executing on the processor;
obtain, by the policy service, a digest generated from at least one portion of executable instructions for the software module;
identify, by the policy service, the at least one profile for the mobile telephone network service provider that controls access to a mobile telephone network, the at least one profile obtained from the mobile telephone network service provider and comprising an identifier for the mobile telephone network service provider, an identifier for the electronic device, and entitlement data indicative of types of operations allowed by the mobile telephone network service provider for software executing on the electronic device that accesses the mobile telephone network;
authenticate, by the policy service, at least one profile for the mobile telephone network service provider;
authenticate, by the policy service, the at least one entitlement associated with the software module based at least in part on the entitlement data associated with the profile of the mobile telephone network service provider and the digest;
communicate, by the policy service, the at least one entitlement to the kernel; and
allow, by the kernel, execution of one or more types of operations by the software module on the processor based on the at least one entitlement; and disallow, by the kernel, execution of one or more types of operations by the software module on the processor based on the at least one entitlement.

9. The computing device of claim 8, wherein the software module comprises at least of an application program or shared libraiy.

10. The computing device of claim 8, wherein the data indicative of the software module comprises a reference to at least a portion of the executable instructions associated with the software module.

## Patentansprüche

1. Rechensystem, umfassend:
eine Speichervorrichtung, die eingerichtet ist, um ein Softwaremodul zur Ausführung auf dem Rechensystem und zumindest ein Profil für einen mobilen Telefonnetzwerkdienstanbieter zu speichern;
Mittel zum Empfangen, durch ein Kernel, der in einem vertrauenswürdigen Raum eines Betriebssystems ausgeführt wird, das auf einem Prozessor ausgeführt wird, einer Anfrage, das Softwaremodul auszuführen, um das Softwaremodul zu testen;
Mittel zum Kommunizieren, durch den Kernel, von Daten, die auf das Softwaremodul hinweisen, an einen Richtliniendienst, der in einem nicht vertrauenswürdigen Raum des Betriebssystems ausgeführt wird, das auf dem Prozessor ausgeführt wird;
Mittel zum Erhalten, durch den Richtliniendienst, eines Digests, der aus zumindest einem Anteil ausführbarer Anweisungen des Softwaremoduls erzeugt wird;
Mittel zum Identifizieren, durch den Richtliniendienst, des zumindest einen Profils für den mobilen Telefonnetzwerkdienstanbieter, der Zugriff auf ein mobiles Telefonnetzwerk steuert, wobei das zumindest eine Profil von dem mobilen Telefonnetzwerkdienstanbieter erhalten wird und einen Identifikator für den mobilen Telefonnetzwerkdienstanbieter, einen Identifikator für die elektronische Vorrichtung und Berechtigungsdaten umfasst, die auf Typen von Handlungen hinweisen, die von dem mobilen Telefonnetzwerkdienstanbieter für Software, die auf der elektronischen Vorrichtung ausgeführt wird, die auf das mobile Telefonnetzwerk zugreift, erlaubt sind;
Mittel zum Authentifizieren, durch den Richtliniendienst, des zumindest einen Profils für den mobilen Telefonnetzwerkdienstanbieter;
Mittel zum Authentifizieren, durch den Richtliniendienst, von zumindest einer Berechtigung, die dem Softwaremodul zugeordnet ist, basierend zumindest zum Teil auf den Berechtigungsdaten, die dem Profil des mobilen Telefonnetzwerkdienstanbieters und dem Digest zugeordnet sind;
Mittel zum Kommunizieren, durch den Richtliniendienst, der zumindest einen Berechtigung an das Kernel;
Mittel zum Erlauben, durch das Kernel, einer Ausführung von einem oder mehreren Typen von Handlungen durch das Softwaremodul auf dem Prozessor basierend auf der zumindest einen Berechtigung; und
Mittel zum Untersagen durch das Kernel von Ausführung von einem oder mehreren Typen von Handlungen durch das Softwaremodul auf dem Prozessor basierend auf der zumindest einen Berechtigung.

2. Computersystem nach Anspruch 1, wobei die Daten, die auf das Softwaremodul hinweisen, eine Referenz auf zumindest einen Anteil der ausführbaren Anweisungen umfassen, die dem Softwaremodul zugeordnet sind.

3. Rechensystem nach Anspruch 2, wobei die Authentifizierungsmittel eine kryptographische Signatur des Digests basierend auf einem kryptographischen Schlüssel einer Einheit, die dem Softwaremodul zugeordnet ist, authentifizieren.

4. Verfahren zum Genehmigen von Software auf einer elektronischen Vorrichtung, das Verfahren umfassend:
Empfangen durch das Kernel, das in einem vertrauenswürdigen Raum eines Betriebssystems ausgeführt wird, das auf einem Prozessor ausgeführt wird, einer Anfrage ein Softwaremodul auszuführen, das auf der elektronischen Vorrichtung gespeichert ist, um das Softwaremodul zu testen;
Kommunizieren, durch das Kernel, von Daten, die auf das Softwaremodul hinweisen, an einen Richtliniendienst, der in einem nicht vertrauenswürdigen Raum des Betriebssystems ausgeführt wird, das auf dem Prozessor ausgeführt wird;
Erhalten durch den Richtliniendienst eines Digests, der aus zumindest einem Anteil ausführbarer Anweisungen des Softwaremoduls erzeugt wird;
Identifizieren durch den Richtliniendienst von zumindest einem Profil für einen mobilen Telefonnetzwerkdienstanbieter, der Zugriff auf ein mobiles Telefonnetzwerk steuert, wobei das zumindest eine Profil von dem mobilen Telefonnetzwerkdienstanbieter erhalten wird und einen Identifikator für den mobilen Telefonnetzwerkdienstanbieter, einen Identifikator für die elektronische Vorrichtung und Berechtigungsdaten umfasst, die auf Typen von Handlungen hinweisen, die von dem mobilen Telefonnetzwerkdienstanbieter für Software, die auf der elektronischen Vorrichtung ausgeführt wird, die auf das mobile Telefonnetzwerk zugreift, erlaubt sind;
Authentifizieren, durch den Richtliniendienst, des zumindest einen Profils für den mobilen Telefonnetzwerkdienstanbieter;
Authentifizieren, durch den Richtliniendienst, von zumindest einer Berechtigung, die mit dem Softwaremodul verbunden ist, basierend zumindest zum Teil auf den Berechtigungsdaten, die dem Profil des mobilen Telefonnetzwerkdienstanbieters und dem Digest zugeordnet sind;
Kommunizieren, durch den Richtliniendienst, von zumindest einer Berechtigung an das Kernel;
Erlauben, durch das Kernel, von Ausführung von einem oder mehreren Typen von Handlungen durch das Softwaremodul auf dem Prozessor basierend auf der zumindest einen Berechtigung; und
Untersagen, durch das Kernel, von Ausführung von einem oder mehreren Typen von Handlungen durch das Softwaremodul auf dem Prozessor basierend auf der zumindest einen Berechtigung.

5. Verfahren nach Anspruch 4, wobei der Dienst, der in dem nicht vertrauenswürdigen Raum ausgeführt wird, einen Prozess umfasst, der in einem Benutzerprozess des Prozessors ausgeführt wird.

6. Verfahren nach Anspruch 4, wobei das Softwaremodul zumindest eines von einem Anwendungsprogramm oder einer geteilten Bibliothek umfasst.

7. Verfahren nach Anspruch 4, wobei die Daten, die auf das Softwaremodul hinweisen, eine Referenz auf zumindest einen Anteil der ausführbaren Anweisungen umfassen, die dem Softwaremodul zugeordnet sind.

8. Rechenvorrichtung, umfassend:
eine Speichervorrichtung, die eingerichtet ist zum:
Speichern eines Softwaremoduls zur Ausführung auf der elektronischen Vorrichtung; und
Speichern von zumindest einem Profil für einen mobilen Telefonnetzwerkdienstanbieter; und
zumindest einen Prozessor eingerichtet zum:
Empfangen durch das Kernel, der in einem vertrauenswürdigen Raum eines Betriebssystems ausgeführt wird, das auf einem Prozessor ausgeführt wird, einer Anfrage ein Softwaremodul auszuführen, das auf der elektronischen Vorrichtung gespeichert ist, um das Softwaremodul zu testen;
Kommunizieren, durch das Kernel, von Daten, die auf das Softwaremodul hinweisen, an einen Richtliniendienst, der in einem nicht vertrauenswürdigen Raum des Betriebssystems ausgeführt wird, das auf dem Prozessor ausgeführt wird;
Erhalten durch den Richtliniendienst eines Digests, der aus zumindest einem Anteil ausführbarer Anweisungen des Softwaremoduls erzeugt wird;
Identifizieren, durch den Richtliniendienst, von zumindest einem Profil für einen mobilen Telefonnetzwerkdienstanbieter, der Zugriff auf ein mobiles Telefonnetzwerk steuert, wobei das zumindest eine Profil von dem mobilen Telefonnetzwerkdienstanbieter erhalten wird und einen Identifikator für den mobilen Telefonnetzwerkdienstanbieter, einen Identifikator für die elektronische Vorrichtung und Berechtigungsdaten umfasst, die auf Typen von Handlungen hinweisen, die von dem mobilen Telefonnetzwerkdienstanbieter für Software, die auf der elektronischen Vorrichtung ausgeführt wird, die auf das mobile Telefonnetzwerk zugreift, erlaubt sind;
Authentifizieren durch den Richtliniendienst des zumindest einen Profils für den mobilen Telefonnetzwerkdienstanbieter;
Identifizieren durch den Richtliniendienst von zumindest einer Berechtigung, die mit dem Softwaremodul verbunden ist, basierend zumindest zum Teil auf den Berechtigungsdaten, die dem Profil des mobilen Telefonnetzwerkdienstanbieters und dem Digest zugeordnet sind;
Kommunizieren, durch den Richtliniendienst, von zumindest einer Berechtigung an das Kernel;
Erlauben, durch das Kernel, von Ausführung von einem oder mehreren Typen von Handlungen durch das Softwaremodul auf dem Prozessor basierend auf der zumindest einen Berechtigung; und
Untersagen, durch das Kernel, von Ausführung von einem oder mehreren Typen von Handlungen durch das Softwaremodul auf dem Prozessor basierend auf der zumindest einen Berechtigung.

9. Rechenvorrichtung nach Anspruch 8, wobei das Softwaremodul zumindest eines von einem Anwendungsprogramm oder einer geteilten Bibliothek umfasst.

10. Rechenvorrichtung nach Anspruch 8, wobei die Daten, die auf das Softwaremodul hinweisen, eine Referenz auf zumindest einen Anteil der ausführbaren Anweisungen umfassen, die dem Softwaremodul zugeordnet sind.

## Revendications

1. Un système informatique comprenant :
un dispositif de stockage configuré pour stocker un module logiciel destiné à être exécuté sur un système informatique et au moins un profil pour un fournisseur de services de réseau téléphonique mobile ;
des moyens de réception, par un noyau s'exécutant dans un espace de confiance d'un système d'exploitation s'exécutant sur un processeur, d'une requête d'exécution du module logiciel pour tester le module logiciel ;
des moyens de communication, par le noyau, de données représentatives du module logiciel à un service de stratégie s'exécutant dans un espace qui n'est pas de confiance du système d'exploitation s'exécutant sur le processeur ;
des moyens d'obtention, par le service de stratégie, d'un condensé généré à partir d'au moins une partie d'instructions exécutables pour le module logiciel ;
des moyens d'identification, par le service de stratégie, du au moins un profil pour le fournisseur de services de réseau téléphonique mobile qui contrôle l'accès à un réseau téléphonique mobile, le au moins un profil étant obtenu du fournisseur de service de réseau téléphonique mobile et comprenant un identifiant pour le fournisseur de services de réseau téléphonique mobile, un identifiant pour le dispositif électronique, et des données d'habilitation représentatives de types d'opérations permises par le fournisseur de service de réseau téléphonique mobile pour un logiciel s'exécutant sur le dispositif électronique qui accède au réseau téléphonique mobile ;
des moyens d'authentification, par le service de stratégie, du au moins un profil pour le fournisseur de services de réseau téléphonique mobile ;
des moyens d'authentification, par le service de stratégie, d'au moins une habilitation associée au module logiciel au moins en partie sur la base des données d'habilitation associées au profil du fournisseur de services de réseau téléphonique mobile du condensé ;
des moyens de communication, par le service de stratégie, de la au moins une habilitation au noyau ;
des moyens pour permettre, par le noyau, l'exécution d'un ou plusieurs types d'opérations par le module logiciel sur le processeur sur la base de la au moins une habilitation ; et
des moyens pour ne pas permettre, par le noyau, l'exécution d'un ou plusieurs types d'opérations par le module logiciel sur le processeur sur la base de la au moins une habilitation.

2. Le système informatique de la revendication 1, dans lequel les données représentatives du module logiciel comprennent une référence à au moins une partie des instructions exécutables associées au module logiciel.

3. Le système informatique de la revendication 2, dans lequel les moyens d'authentification authentifient une signature cryptographique du condensé sur la base d'une clé cryptographique d'une entité associée au module logiciel.

4. Un procédé d'autorisation d'un logiciel sur un dispositif électronique, le procédé comprenant :
la réception, par le noyau s'exécutant dans un espace de confiance d'un système d'exploitation s'exécutant sur un processeur, d'une requête d'exécution d'un module logiciel stockée sur le dispositif électronique afin de tester le module logiciel ;
la communication, par le noyau, de données représentatives du module logiciel à un service de stratégie s'exécutant dans un espace qui n'est pas de confiance du système d'exploitation s'exécutant sur le processeur ;
l'obtention, par le service de stratégie, d'un condensé généré à partir d'au moins une partie d'instructions exécutables pour le module logiciel ;
l'identification, par le service de stratégie, d'au moins un profil pour un fournisseur de services de réseau téléphonique mobile qui contrôle l'accès à un réseau téléphonique mobile, le au moins un profil étant obtenu du fournisseur de service de réseau téléphonique mobile et comprenant un identifiant pour le fournisseur de services de réseau téléphonique mobile, un identifiant pour le dispositif électronique, et des données d'habilitation représentatives de types d'opérations permises par le fournisseur de service de réseau téléphonique mobile pour un logiciel s'exécutant sur le dispositif électronique qui accède au réseau téléphonique mobile ;
l'authentification, par le service de stratégie, du au moins un profil pour le fournisseur de services de réseau téléphonique mobile ;
l'authentification, par le service de stratégie, d'au moins une habilitation associée au module logiciel au moins en partie sur la base des données d'habilitation associées au profil du fournisseur de services de réseau téléphonique mobile du condensé ;
la communication, par le service de stratégie, de la au moins une habilitation au noyau ;
la permission, par le noyau, de l'exécution d'un ou plusieurs types d'opérations par le module logiciel sur le processeur sur la base de la au moins une habilitation ; et
la non-permission, par le noyau, de l'exécution d'un ou plusieurs types d'opérations par le module logiciel sur le processeur sur la base de la au moins une habilitation.

5. Le procédé de la revendication 4, dans lequel le service s'exécutant dans l'espace qui n'est pas de confiance comprend un processeur s'exécutant dans un processus utilisateur du processeur.

6. Le procédé de la revendication 4, dans lequel le module logiciel comprend au moins l'un parmi un programme applicatif ou une bibliothèque partagée.

7. Le procédé de la revendication 4, dans lequel les données représentatives du module logiciel comprennent une référence à au moins une partie des instructions exécutables associées au module logiciel.

8. Un dispositif informatique comprenant :
un dispositif de stockage configuré pour :
le stockage d'un module logiciel destiné à être exécuté sur le dispositif électronique ; et
le stockage d'au moins un profil pour un fournisseur de services de réseau téléphonique mobile ; et
au moins un processeur configuré pour :
la réception, par un noyau s'exécutant dans un espace de confiance d'un système d'exploitation s'exécutant sur le processeur, d'une requête d'exécution du module logiciel afin de tester le module logiciel ;
la communication, par le noyau, de données représentatives du module logiciel à un service de stratégie s'exécutant dans un espace qui n'est pas de confiance du système d'exploitation s'exécutant sur le processeur ;
l'obtention, par le service de stratégie, d'un condensé généré à partir d'au moins une partie d'instructions exécutables pour le module logiciel ;
l'identification, par le service de stratégie, du moins un profil pour un fournisseur de services de réseau téléphonique mobile qui contrôle l'accès à un réseau téléphonique mobile, le au moins un profil étant obtenu du fournisseur de service de réseau téléphonique mobile et comprenant un identifiant pour le fournisseur de services de réseau téléphonique mobile, un identifiant pour le dispositif électronique, et des données d'habilitation représentatives de types d'opérations permises par le fournisseur de service de réseau téléphonique mobile pour un logiciel s'exécutant sur le dispositif électronique qui accède au réseau téléphonique mobile ;
l'authentification, par le service de stratégie, du au moins un profil pour le fournisseur de services de réseau téléphonique mobile ;
l'authentification, par le service de stratégie, d'au moins une habilitation associée au module logiciel au moins en partie sur la base des données d'habilitation associées au profil du fournisseur de services de réseau téléphonique mobile du condensé ;
la communication, par le service de stratégie, de la au moins une habilitation au noyau ;
la permission, par le noyau, de l'exécution d'un ou plusieurs types d'opérations par le module logiciel sur le processeur sur la base de la au moins une habilitation ; et
la non-permission, par le noyau, de l'exécution d'un ou plusieurs types d'opérations par le module logiciel sur le processeur sur la base de la au moins une habilitation.

9. Le dispositif informatique de la revendication 8, dans lequel le module logiciel comprend au moins l'un parmi un programme applicatif ou une bibliothèque partagée.

10. Le dispositif informatique de la revendication 8, dans lequel les données représentatives du module logiciel comprennent une référence à au moins une partie des instructions exécutables associées au module logiciel.
